Europäisches Patentamt

European Patent Office

Office européen des brevets

(11) Publication number: **0 256 571**
**A1**

## EUROPEAN PATENT APPLICATION

(21) Application number: **87201241.4**

(22) Date of filing: **29.06.87**

(51) Int. Cl.⁴: **B28B 1/26**

The title of the invention has been amended (Guidelines for Examination in the EPO, A-III, 7.3).

(30) Priority: **11.07.86 IT 2110186**

(43) Date of publication of application:
**24.02.88 Bulletin 88/08**

(84) Designated Contracting States:
**AT BE CH DE ES FR GB GR LI LU NL SE**

(71) Applicant: **NASSETTI ETTORE S.p.A.**
**Viale Leonardo da Vinci, 283/285**
**I-20090 Trezzano S/N Milano(IT)**

(72) Inventor: **Nassetti, Roberto**
**Via Togliatti, 8**
**I-20090 Zibido S. Giacomo Milano(IT)**

(74) Representative: **Martegani, Franco et al**
**Ingg. GUZZI e RAVIZZA S.r.l. Via Boccaccio, 24**
**I-20123 Milano(IT)**

(54) Device for slip-casting sanitary ceramic articles.

(57) A device for producing sanitary articles includes at least two half-molds (10) carried by respective slidable members (11) with cooperate auxiliary blocking devices of the mold in closed position. Between said members (11) and said half-molds (10) is provided a chamber where a fluid under pressure is applyable.

Fig.2

EP 0 256 571 A1

## IMPROVED PRESS FOR PRODUCING SANITARY ARTICLES

To those skilled in the art it is well known the method for producing sanitary articles emploing a mold including at least two porous half-molds carried by the respective boards of a press, to whom it is intrusted the task of closing and opening the mold itself.

Some slurry is poured into the closed mold (vitro ceramic or the like in aqueous solution). Said liquid casting is carried out under a very high pressure capable to eject the liquid phase of the slurry ($H_2O$) through the pores of the mold, while the solid phase (vitro-ceramic) is retained against the internal walls, locating by such a way the shape of the article to be produced. Said shape is later hardened through a phase of immission of compressed air.

A method of the type described above, including the relevant apparatus, is the object of the european patent application 0089317 filed on September 21, 1983 under the name Keramic Holding A.G. Laufen. Reference is made the this application in case further explanations concerning the general state of the art in this specific field were requested.

When carrying out said molding method, one of the most important technical problems to solve is that connected with the closure of the mold, that has to be such as to ensure a perfect seal in spite of the very high pressures involved in order to eject the liquid phase of the slurry ($H_2O$), from 10 to 50 atmospheres.

Clearly pressures of such an order of magnitude may weigh on the press pistons provided that these have a very relevant size, making them very expensive.

It is thus preferable to entrust with the pistons the task of handling the half molds, that are kept in a closed position by auxiliary blocking devices.

Nevertheless, the intervention of such auxiliary blocking devices involves a certain further bedding of the half molds position, after the same have already been closed by the press.

This bedding is the main cause of the losses that take place along the contact edge of the closed half molds, because it is difficultly recoverable acting on the closing devices of the press especially when asymmetric loads are present because of multiple moldings and the particular shapes of the casting to be produced.

The present invention has the general purpose to obviate to said inconveniences accomplishing a press capable of ensuring a perfect hermetic seal among all the mold components.

In view of such a purpose, according to the invention it has been thought to carry out a press for producing sanitary articles of the type including at least two half molds carried by the respective translable boards with which cooperate auxiliary blocking devices in a closed position, characterized by that between said boards and said half molds are interposed respective deformable sections to locate a chamber in which it is injectable a fluid under pressure, after the mold has been closed, and the intervention of said blocking devices.

The structural and functional characteristics of the invention and its advantages over the prior art shall result even more evident examining the following description, referred to the schematic drawings enclosed, that show an example of a press obtained according to the principle of the invention itself. In the drawings:
-figures from 1 to 10 show the operative phases of said press.

In the drawings, only as a not restrictive example, it has been shown a press having a mold simply composed of two half molds. Naturally, the principles of the invention are equally appliable to much more complicated moldings.

With reference to the drawings, by 10 are - schematically indicated two half molds mounted on the respective boards 11 of a press of a type well known to those skilled in the art and because of this not shown in detail.

According to the present invention, each mold 10 is mounted on pertinent board 11 by the interposition of movable 18 mold holder plate energized by a member subjec to strain 12, for example a rubber (vulkollan) membrane which together with the same board 11 locates a chamber 13 in which it is injectable a fluid under pressure through a duct 14.

With each board 11 cooperates a pair of blocking devices composed of strickers 15, step shaped, and controllable to move in the sense of the arrows.

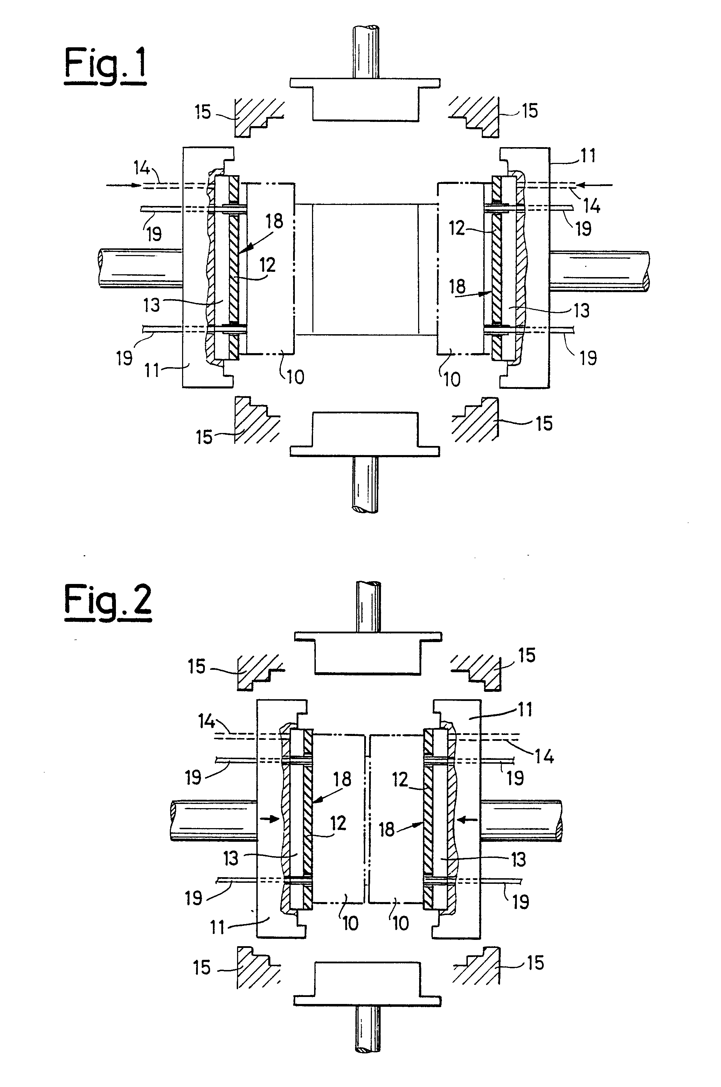

The press operation according to the invention is the following. The closing of the mold is obtained taking the boards 11 of position of figure 1 into position of figure 2, were the two half molds are abutting one against the other correspondingly to their free edges.

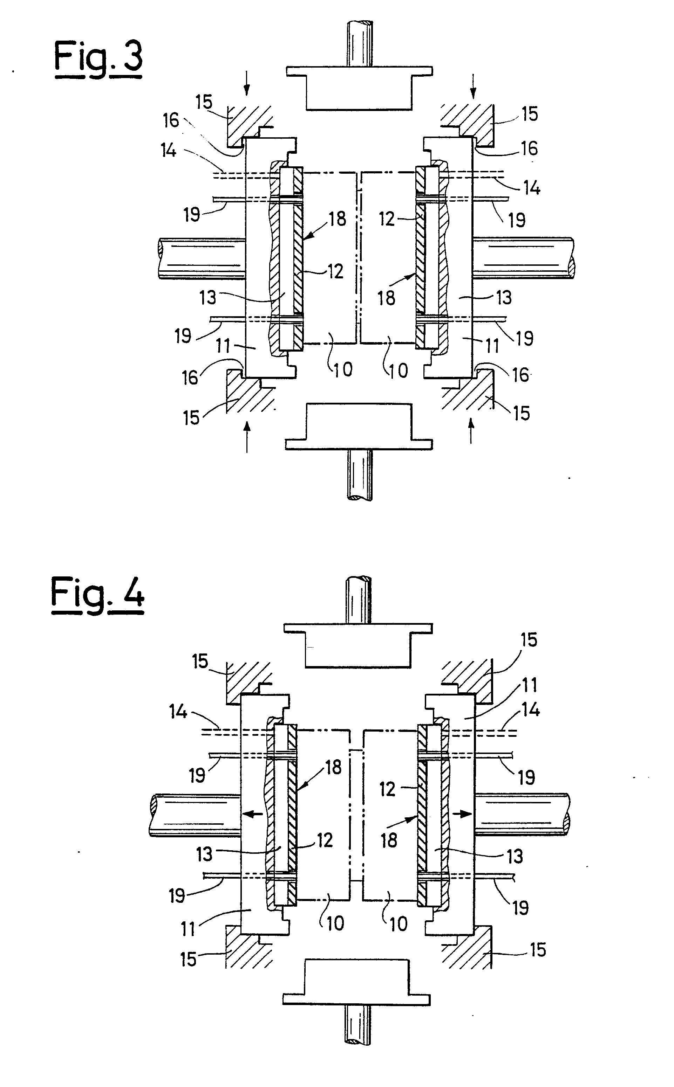

At this point the locking strickers 15 are taken from position of figure 2 to that of figure 3 in engagement with the sides of the boards 11, but leaving a certain play 16 in order to allow the same boards 11 to perfectly settle into the blocked position by means of their little movement in the sense of opening of the mold, as shown in figure 4.

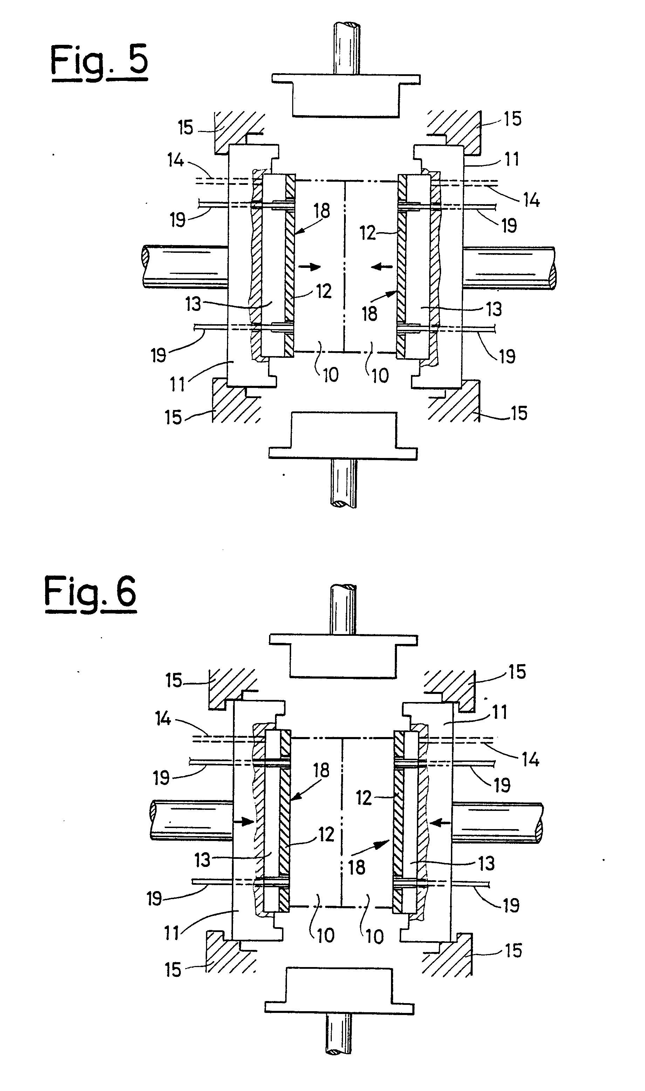

This settlement of boards 11 naturally causes a mutual removal of the half molds 10, that are perfectly seal closed into position of figure 5 putting under pressure the subject to strain chamber 13.

In fact, injecting water under pressure into chamber 13, through a feed line 19, it is caused a translation of the mold holders 18 in the direction of closure of the half molds 10 that automatically will self-adapt correspondingly to the sealing edges faced thanks to the peculiar transmission system of the load through the subject to strain member 12 and thanks to the fact that the half mold 10 are mounted on the pertinent slides 19 having a certain degree of end play.

It should be observed that, since the chamber 13 has a surface even slightly superior to that of the pertinent half mold 10, even a relatively low pressure shall be sufficient to ensure a perfect seal closing of the mold.

The mold being into the closed position of figure 5, the casting of the piece is effected. When the forming operation has been accomplished, pressure is released from chamber 13 (figure 6) and in the mean time the boards 11 are made to slide in the sense of the arrows to keep the mold into a closed position.

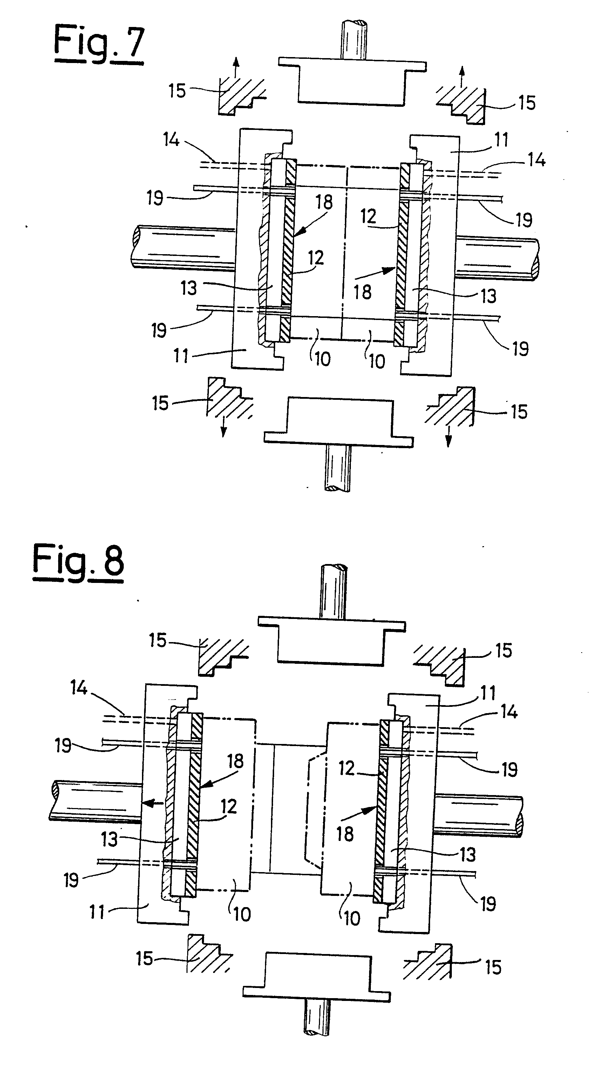

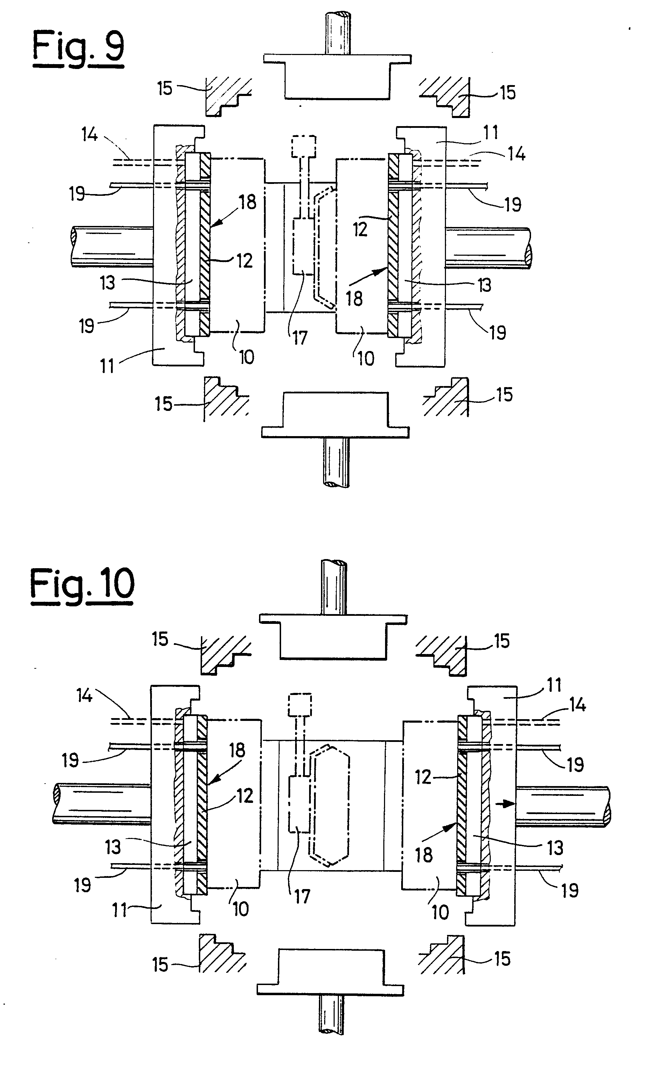

The locking strickers 15 are opened into position of figure 7, the first half mold (figure 8) is removed and, in a known way enters a drawing device 17 that engages the piece by means of depression (figure 9), the second half mold is removed (figure 10) and the formed casting is taken from the press by means of said drawing 17 device.

The forming cycle is so finished.

## Claims

1) A press for producing sanitary articles of the type including at least two half molds carried by relevant translable boards with whom cooperate auxiliary blocking devices of the mold in closed position, characterized by that among said boards and said half molds are interposed respective members subject to strain that locate a chamber in which it is injectable a fluid under pressure after the mold has been closed and the intervention of said blocking devices.

2) A press according to claim 1, characterized by that said subject to strain members are formed each by a mold-holder and by a membrane relatively resiliently yielding located between the board and the half-mold, said mold-holder being mounted on slides and having some clearance.

Fig.1

Fig.2

## Fig.3

## Fig.4

## Fig. 5

## Fig. 6

## Fig.7

## Fig.8

Fig. 9

Fig. 10

| | DOCUMENTS CONSIDERED TO BE RELEVANT | | EP 87201241.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 790 027 (SHENANGO)<br>* Fig. 1 * | 1 | B 28 B 1/26 |
| Y | DE - A1 - 3 238 515 (GEBRÜDER NETZSCH)<br>* Fig. on the title-page; page 13, lines 7-20 * | 1,2 | |
| Y | FR - A - 1 364 675 (LE MATERIEL)<br>* Fig. 3 * | 1,2 | |
| A | GB - A - 2 137 924 (HUME)<br>* Fig. 1 * | | |
| T | SOVIET INVENTIONS ILLUSTRATED, section P,Q; week 8426, August 8, 1984<br>DERWENT PUBLICATIONS LTD., London, P 64<br>* SU-1 047 694 (GIDROPROEKT RES INST) * | | **TECHNICAL FIELDS SEARCHED (Int. Cl.4)**<br><br>B 28 B |

The present search report has been drawn up for all claims

| Place of search | Date of completion of the search | Examiner |
|---|---|---|
| VIENNA | 08-10-1987 | GLAUNACH |